(19) Europäisches Patentamt
European Patent Office
Office européen des brevets

(11) Publication number: **0 001 666**
**B1**

# (12) EUROPEAN PATENT SPECIFICATION

(45) Date of publication of patent specification: 05.05.82

(51) Int. Cl.³: C 08 J 9/08, C 08 L 33/24, C 08 L 79/08

(21) Application number: 78200251.3

(22) Date of filing: 17.10.78

## (54) Imide-crosslinked ethylenic polymer resin foams and method of making.

(30) Priority: 17.10.77 US 842642

(43) Date of publication of application:
02.05.79 Bulletin 79/9

(45) Publication of the grant of the patent:
05.05.82 Bulletin 82/18

(84) Designated Contracting States:
BE DE FR GB NL SE

(56) References cited:
DE - A - 2 454 856
DE - A - 2 517 106
US - A - 3 380 964
US - A - 3 533 996
US - A - 3 950 279

(73) Proprietor: THE DOW CHEMICAL COMPANY
2030 Abbott Road Post Office Box 1967
Midland, Michigan 48640 (US)

(72) Inventor: Corbett, John Marvin
781 Jonathan Lane
Newark Licking Ohio (US)
Inventor: Skochdopole, Richard Ernest
2525 Lambros
Midland Midland Michigan (US)
Inventor: Devrieze, Jerry Dean
2300 Parkwood
Midland Midland Michigan (US)

(74) Representative: Urbanus, Henricus Maria, Ir. et al,
c/o Vereenigde Octrooibureaux Nieuwe Parklaan 107
NL-2587 BP 's-Gravenhage (NL)

EP 0 001 666 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

Imide-crosslinked ethylenic polymer resin foams and method of making

This invention concerns cellular highly cross-linked three-dimensional ethylenic polymer resins which include (but are not limited to) such resins having polymeric structures illustrated by the formula:

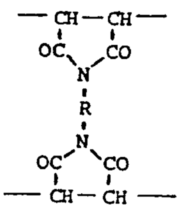

(Formula I)

wherein R is an organic radical with its bonds on different carbon atoms. Such resins have carbon-to-carbon ethylenic polymer chains and multiple imide crosslinkages.

Resins having structure like that of Formula I are known in non-cellular form, but foams of such resins have not heretofore been known. For example, such non-cellular, crosslinked resins from N,N'-bis-maleimides are described in U.S. Patents Nos. 3,380,964 (F. Grundschober et al.) 3,406,148 (J. Sambeth et al.), 3,533,996 (F. Grundschober et al.), and 3,890,272 (G. F. D'Alelio).

The "polyimide foams" that are known in the art have resin structures different from that of Formula I and include those wherein the imide groups are recurring linkages in the main polymer chain such as those obtained by reaction of a dianhydride of a tetracarboxylic acid, e.g., pyromellitic dianhydride and a diamine as described in U.S. Patents Nos. 3,249,561 (W. R. Hendrix), 3,310,506 (L. E. Amborski et al.), 3,483,144 (E. Lavin et al.), and 3,554,939 (E. Lavin et al.). Foams having structures similar to those just mentioned are also made by reaction of a tetracarboxylic acid or dianhydride with a polyisocyanate as described in 3,300,420 (H. E. Frey), 3,479,305 (S. T. Kus et al.), 3,489,696 (G. W. Miller), 3,562,189 (W. J. Farrissey, Jr., et al.), 3,620,987 (A. M. McLaughlin et al.), 3,644,234 (R. L. Grieve), and 3,772,216 (R. W. Rosser et al.). According to US—A—3.950.279 heat-resistant foams are prepared from a cyclic diimide or triimide of certain unsaturated carboxylic acids and azo-methines to give a polyamide backbone polymer. Another kind of foam from resins having "imide" linkages is described in German Offenlegungsschrift No. 25—17—106 (F. Zumstein et al.). None of these prior art foam resins has resin polymeric molecular structure like that of Formula I. Although, as mentioned, non-cellular forms of such resins are known, their highly crosslinked molecular structure would prevent the simple expansion thereof to foamed products in the manner of foaming usual thermoplastic resins. Nevertheless, by developing a process of simultaneous polymerization, cross-linking and foaming of the resin-forming reactants, we provide such foamed imide cross-linked ethylenic resins having outstanding ignition and burning resistance.

More particularly this invention provides a cellular resin body having apparent density less than 480 g/l (30 pounds per cubic foot) characterized in that the resin is a highly crosslinked three dimensional polymer consisting essentially of mer units having the general structural formula:

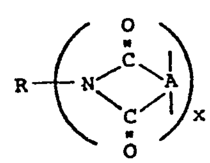

(Formula II)

wherein:

A is a tetravalent organic radical,

the carbonyl groups are attached to vicinal carbon atoms in A,

the polymeric valence bonds of A are on vicinal carbon atoms,

R is a hydrocarbyl or oxydi(hydrocarbyl) radical having at least 2 carbon atoms and having x valence bonds on different carbon atoms,

x is 2 to 4, and the above illustrated unit is connected by the polymer valence bonds thereof to at least two other such units. Radical R includes aliphatic, acylic or cyclic, aromatic, combinations of aliphatic and aromatic, heterocyclic and bridged radicals. When R contains an aromatic ring, the same is any such as:

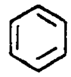 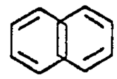 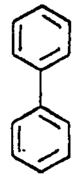 and 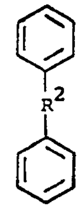

where the rings may be further substituted with alkyl, alkoxy, or like non-functional groups, and $R^2$ is any bridging group such as methylene or other alkylene, R is especially methylenediphenylene or oxydiphenylene.

When x in Formula II is 2, the mer units are bis-imides, and the resin structure can be represented by the formula:

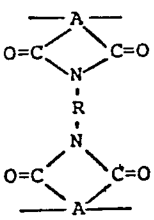

(Formula II-A)

The poly(bis-maleimide) of Formula I is illustrative of the resins of Formulae II and II-A.

Each mer unit of the resin structures shown in Formulae I, II and II-A is connected by its polymer valence bonds to at least two other such units.

Such cellular resin bodies are made in accordance with the method of this invention by heating to temperature typically above 200°C to effect polymerization, cross-linking and foaming of a reaction mixture containing the resin-forming reactant or reactants.

In one variation of the method, the resin-forming reaction mixture comprises at least one ethylenically unsaturated cyclic imide having the general formula:

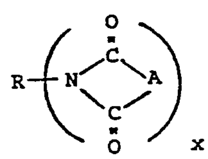

(Formula III)

wherein R and x are the same as in Formula II and wherein the divalent radical A has a polymerizable ethylenic double bond and is the C=C monomeric form of the tetravalent radical A in Formula II. In such monomeric form, the divalent radical A of Formula III is preferably at least one of the groups represented by the formulae:

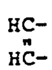 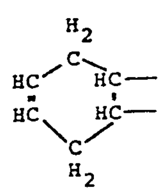 and 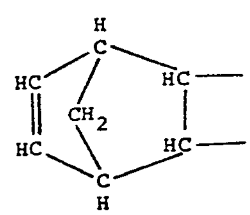

wherein the valences are attached to carbonyl groups, i.e., corresponding to maleic, tetrahydrophthalic and bicyclo(2.2.1)hept-5-ene-2,3-dicarboxylic groups, respectively, which on addition polymerization of the ethylenic double bond forms the tetravalent radical A in Formula II.

In the above form of the method, the reaction mixture also contains a thermally decomposable chemical blowing agent which, upon heating of the reaction mixture, generates gases as the A-groups of the imide polymerize and crosslink forming a cellular resin structure.

In another variation of the method, the resin-forming reaction mixture comprises at least one ethylenically unsaturated amic acid having the general formula:

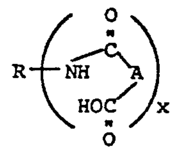

(Formula IV)

wherein R, A and x are the same as in Formula III. In this form of the method, as the A-groups polymerize and crosslink on heating the reaction mixture, the amic acid groups tend to cyclize forming cyclic imide groups and liberating water. The water so formed acts as a blowing agent, forming a cellular resin structure. However, the starting reaction mixture advantageously contains an added thermally decomposable blowing agent.

In yet another variation of the method, the resin-forming reaction mixture comprises at least one polymerizable ethylenically unsaturated dicarboxylic acid cyclic anhydride and at least one primary polyamine having the formulae, respectively:

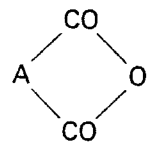

and $R-(NH_2)_x$

(Formula V) (Formula VI)

wherein A, R and x are again the same as in Formula II. The anhydride and primary amine groups interact to form amic acid groups which, as in the case previously described, tend to cyclize forming cyclic imide groups when the reaction mixture is heated to polymerize the A-groups. As in the modes starting with amic acids, water is formed and contributes to cell formation in this resin-forming reaction mixture, which advantageously also contains a thermally decomposable blowing agent.

The resin-forming and foaming reactions are carried out in the presence of certain surface-active agents, i.e., surfactants, which assist in initiating and stabilizing uniform cell structure in the foaming and foamed product.

The products of this invention are rigid, strong cellular resin bodies having density less than 480 g/l (thirty pounds per cubic foot (pcf)). They have high thermal stability, low heat conductivity, low thermal expansion, insolubility in common solvents and outstanding resistance to ignition and burning. When exposed to a flame of combustible gas in air at temperature in the order of 1100°C, they do not melt or ignite; they can be heated to glowing in such flame and generate little smoke with only slow loss of weight. Thus, they are useful for insulation and fabrication of articles requiring such resistance and inertness.

In the modes of reaction using starting cyclic anhydrides of Formula V, illustrative and preferred such anhydrides are maleic anhydride, tetrahydrophthalic anhydride, bicyclo(2.2.1)hept-5-ene-2,3-dicarboxylic acid anhydride, and mixtures thereof as specific examples.

In the modes of reaction using starting poly(primary amines) of general Formula VI, specific such amines (for illustration, not excluding others) include:

ethylenediamine
propylenediamine
butylenediamine
tetramethylenediamine
hexamethylenediamine
octamethylenediamine
3-methyl-heptamethylenediamine
2,5-dimethyl-hexamethylenediamine
decamethylenediamine
2,11-diaminododecane
1,4-diaminocyclohexane
1,4-bis(aminomethyl)cyclohexane
1,2-bis(3-aminopropoxy)ethane
N,N-bis(3-aminopropyl)methylamine
1,4-phenylenediamine
1,3-phenylenediamine
the several tolylenediamines
the several $\alpha,\alpha'$-and ar, ar-xylylenediamines
1,3,5-triaminobenzene
2,4,6-triaminotoluene
bis(4-aminophenyl)methane
bis(3-aminophenyl)methane

2,2-bis(3-aminophenyl)propane
2,2-bis(4-aminophenyl)propane
4,4′-oxydianiline
4,4′-diaminobiphenyl
1,5-diaminonaphthalene (and 1,4-, 2,6-, 2,7- etc.)
2,4-bis(beta-amino-t-butyl)toluene
bis-(para-beta-amino-t-butyl-phenyl)ether
para-bis(2-methyl-4-amino-pentyl)benzene
para-bis-(1,1-dimethyl-5-amino-pentyl)benzene
bis-(4-aminocyclohexyl)methane
and mixtures therof.

Also suitable are poly(methylene aryl amines) such as those of the general formula:

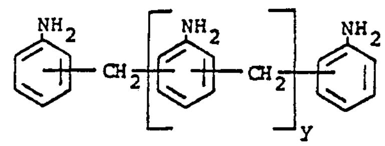

wherein y is 0 or an integer from 1 to 4 preferably having an average value from 0 (x in Formula VI is 2) to 1 (x is 3).

The preferred polyamines are those which have high boiling points.

In modes of reaction using ethylenically unsaturated cyclic imides of the general Formula III, such imides can be viewed as imide derivatives of the poly(primary amines) just described. Specific examples (for illustration and not to exclude other examples) of imides of Formula III useful in this method include:

N,N°-ethylene-bis-maleimide
N,N′-hexamethylene-bis-maleimide
N,N′-m(or p)-phenylene-bis-maleimide
N,N′-p,p′-diphenylmethane-bis-maleimide
N,N′-p,p′-diphenylether-bis-maleimide
N,N′-4,4′-dicyclohexylmethane-bis-maleimide
N,N′-$\alpha$,$\alpha$′-dimethylenecyclohexane-bis-maleimide
N,N′-1,5-naphthalene-bis-maleimide

and like maleimides of poly(primary amines) and mixtures thereof, and corresponding imides of tetrahydrophthalic acid, of bicyclo(2.2.1)hept-5-ene-2,3-dicarboxylic acid, and mixtures of such acids.

In modes of reaction using ethylenidcally unsaturated amic acids of general Formula IV, these can be viewed as amic acid derivatives of the poly(primary amines) of Formula VI hereinbefore specifically illustrated. Specific examples (for illustration and not to exclude other examples) of amic acids of Formula IV useful in this method include:

N,N′-ethylene-bis-maleamic acid
N,N′-hexamethylene-bis-maleamic acid
N,N′-m(or p)-phenylene-bis-maleamic acid
N,N′-p,p′-diphenylmethane-bis-maleamic acid
N,N′-p,p′-diphenylether-bis-maleamic acid
N,N′-4,4′-dicyclohexylmethane-bis-maleamic acid
N,N′-$\alpha$,$\alpha$′-dimethylenecyclohexane-bis-maleamic acid
N,N′-1,5-naphthalene-bis-maleamic acid

and like maleamic acids of poly(primary amines) and mixtures thereof, and corresponding amic acids of tetrahydrophthalic acid, of bicyclo(2.2.1)hept-5-ene-2,3-dicarboxylic acid, and of mixtures of such acids.

While the reaction conditions to make the imide-crosslinked foams of this invention vary somewhat depending upon the starting material and reaction route as will be described in greater detail hereinafter, the resin-forming-foaming reaction generally involves heating the reaction mixture to a temperature above the melting point of the mixture, typically above 200°C, at which temperature polymerization of the ethylenic C=C linkages takes place, in the presence of a thermally decomposable blowing agent, at least when the resin-forming material consists essentially of a defined ethylenically unsaturated imide, and in the presence of a surfactant, with the formation of a crosslinked ethylenic polymer resin foam.

The blowing agent is selected to be relatively stable at temperatures below the temperature at which the reaction mixture melts and undergoes crosslinking and to decompose at such crosslinking polymerization temperature to evolve gaseous and/or vaporous products within the resin-forming reaction mixture causing foaming thereof while the reaction mixture is in the transition stage from a mobile flowable state to a non-flowable state. The blowing agents are normally solid materials usually used in finely-divided form and uniformly dispersed in the starting reaction mixture. Such blowing

agents are known *per se* as described in "Plastic Foams" by Calvin J. Benning, Vol. 2, pages 294—313, and are commercially available under various brand names. Specific examples of such blowing agents useful and preferred in the present invention include ethylene carbonate, p-toluene sulfonyl semicarbazide (e.g., "Celogen RA" trade name of Uniroyal), and 5-phenyltetrazole (U.S. Patent 3,442,829, L. D. Moore et al.; cf. 3,873,477, W. Beck et al.).

The amount of blowing agent used is predetermined by the specific characteristics of the blowing agent and the resin reaction mixture to provide the desired apparent density in the resulting foamed resin product, usually in proportion up to 20 parts, preferably from 1 to 10 parts, of blowing agent per 100 parts of primary resin-forming reactants in the resin reaction mixture, by weight.

A surfactant is used in the resin-forming-foaming reaction mixture, to assist in initiation of gas bubbles in the foaming reaction mixture, to stabilize the cell structure of the foam, and to assist in obtaining uniform, small cells, i.e., fine-celled foam. Typical surfactants for general use in resin foam technology are known *per se* as described in "Plastic Foams" by Calvin J. Benning, Vol. 2, pages 320—325. However, since the resin-forming-foaming reaction takes place at high reaction temperature, the selected surfactant must be one which is thermally stable at such temperature. For reactions at 225°C in accord with this invention, the following surfactants were found to be sufficiently stable and effective for the purpose:

| Surfactant | Trade Name | Chemical Description |
|---|---|---|
| 1. | Surfynol 104 | tetramethyl decynediol |
| 2. | Dowfax 2AI liq. (45% solids) | Sodium dodecyl-diphenyl-ether-disulfonate |
| 3. | Dowfax 3B2 liq. (45% solids) | Sodium n-decyl-diphenylether-disulfonate |
| 4. | — | Sodium lauryl sulfate (40% solids) |
| 5. | Aerosol A-102 (30% solids) | Disodium ethoxylated alcohol half ester of sulfosuccinic acid |
| 6. | Aerosol A-103 (30% solids) | Disodium ethoxylated nonyl phenol half ester of sulfosuccinic acid |
| 7. | Alipal EP-110 liq. | Ammonium salt of a sulfate ester of an alkylphenoxypoly(ethyleneoxy)ethanol |
| 8. | Alipal EP-120 liq. | Similar to Alipal EP-110 |
| 9. | Alipal CO-433 liq. | Sodium salt of a sulfate ester of an alkylphenoxy poly (ethyleneoxy)ethanol |
| 10. | F-218 | Cyclic dimethylsiloxane |
| 11. | DC-200 $10^{-4}$ to $6.10^{-2}$ $m^2$ $s^{-1}$ (100 to 60,000 cs) | Dimethylsiloxane polymers |
| 12. | DC-510 $10^{-4}$ to $10^{-1}$ $m^2$ $s^{-1}$ (100 to 100,000 cs) | Phenylmethylsiloxane polymers |
| 13. | Deriphat 154 | Disodium salt of N-tallow beta-aminodipropionate |
| 14. | Ninol AA-62 | Fatty acid alkanolamide |
| 15. | Miranol HM | Dicarboxylic lauric derivative, sodium salt |
| 16. | Witcamide 5130 | Alkanolamine fatty acid condensate. |

Silicone glycol block copolymers, which are effective surfactants in many urethane foam systems, were ineffective in the present resin-forming-foaming process as were other surfactants which are thermally unstable at the high temperatures employed.

The surfactants are usually used in amounts up to 25 parts, preferably from 1 to 10 parts thereof per 100 parts of the resin-forming reaction mixture, by weight.

In the preparation of imide-crosslinked polymer foams from unsaturated imides of Formula III according to this invention, the imide, for example, 4,4′-methylene-dianiline-bis-maleimide, preferably in powdered solid form, is mixed with blowing agent and surfactant and heated to a temperature above its melting point and typically above 200°C until the exothermic addition polymerization reaction of the ethylenic C=C linkages occurs, and above the decomposition temperature of the blowing agent. The reaction mixture, which is fluid when the imide first melts, becomes more viscous as the polymerization proceeds and foams as the gaseous or vaporous decomposition products are formed from the blowing agent. The viscosity and volume of the foaming reaction mixture increase until the resin material hardens and no further expansion occurs. Heating is preferably continued at temperature up to 300°C to fully cure the resin and complete the crosslinking polymerization reaction. Typically, the reaction mixture is heated for about 30 minutes at 200°C to 250°C and for an additional period of up to 90 minutes at 250° to 300°C. The resulting foamed resin product is usually beige to tan to black or nearly black in color, infusible, insoluble in usual solvents, and cannot be ignited with an ordinary gas flame in air. The apparent density of the resulting foamed resin product depends on the kind and amount of blowing agent, surfactant and imide and is usually from 0.008 g/cc. (0.5 pcf) to 0.48 g/cc. (30 pcf).

In the preparation of crosslinked resin foams from unsaturated amic acids of Formula IV according to this invention, the amic acid, for example, 4,4′-methylene-dianiline-bis-maleamic acid, preferably in powdered solid form, is usually mixed with blowing agent and surfactant and heated to reaction temperature. At and above the melting point, typically above 200°C, e.g., from 200° to 275°C, the amic acid groups usually cyclize to form cyclic imide linkages, e.g., maleimide groups, with loss of water. Concurrently at such temperatures, addition polymerization of the ethylenic C=C groups occurs, and the thermally decomposable blowing agent decomposes. The gaseous and vaporous products from the blowing agent, if present, and the water vapor from the imide-cyclization of the amic acid groups cause foaming of the reaction mixture as polymerization continues to form a highly crosslinked structure. The viscosity and volume of the foaming reaction mixture increase until the resin material hardens and no further expansion occurs. Heating is preferably continued at a temperature up to 300°C to fully cure the resin and complete the crosslinking polymerization reaction. Typically, the reaction mixture is heated for 30 minutes at 200° to 250°C and for an additional period up to 90 minutes at 250° to 300°C. The resulting foamed resin products from these amic acids are very similar to the foamed resin products from imides.

In the preparation of crosslinked resin foams by another mode of the method of this invention, the primary starting materials are ethylenically unsaturated dicarboxylic acid cyclic anhydrides and primary polyamines, both as hereinbefore defined. In this mode, the anhydride and primary amino groups are believed to react to form intermediate amic acids which by loss of water form cyclic imide groups. The reactants are uniformly mixed in proportions preferably near to one mole of the anhydride for each amino equivalent of the polyamine, e.g., two moles of maleic anhydride for one mole of a methylene-dianiline, i.e., in nearly theoretical proportion of x moles anhydride per mole of poly(primary amine) $R{-}(NH_2)_x$. In one variation, the mixture of anhydride and polyamine, together with blowing agent and surfactant, is heated to a temperature typically above 200°C where the mixture is molten and where chemical reactions occur to form cyclic imide groups and where the blowing agent, if present, decomposes while crosslinking polymerization of the C=C linkages take place. In another variation, the starting anhydride and starting polyamine, either one or both also containing one or both of the selected blowing agent and surfactant, are separately preheated, e.g., to 150°—200°C, and streams of the hot starting materials in required proportion are fed together and rapidly and thoroughly mixed together. In either case, the reaction mixture is allowed or caused to increase in temperature to effect the resin-forming and foaming reactions. Further processing of the resulting reaction mixture and product is similar to that described for other modes of the invention, i.e., heating at a temperature up to 300°C until the resin structure is fully cured.

The reaction mixtures can also include modifying amounts of other reactant materials. For example, modifying amounts of non-polymerizable acid anhydrides such as succinic anhydride or phthalic anhydride, or of mono-primary amines or of secondary amines can be included in the reaction mixture to modify the molecular structure and properties of the resin foam product, if desired.

The starting reaction mixtures can also contain fillers and fibrous materials, especially inert inorganic fillers, glass beads, micro balloons or fibers, carbon fibers, or the like.

Starting reaction mixtures of starting unsaturated imide or amic acid with blowing agent and with surfactant, fillers and like additives, are storage stable and can be held indefinitely at ordinary room temperature before heating to effect foaming and resin polymerization. Similarly, the initial reaction mixture product of anhydride and poly primary amine, together with optional blowing agent, surfactant, filler, etc., if it is cooled before the temperature exceeds about 200°C, is storage stable and can be held

indefinitely at ordinary room temperature before heating to effect foaming the resin polymerization.

The crosslinked resin foams of this invention can be formed or fabricated into useful articles. Full or partial shaping can be obtained by carrying out the resin-forming-foaming reaction in a suitable mold, e.g., a vented closed mold. Blocks, slabs and boards are also made by allowing the resin to foam upward with a free top surface or between parallel belts. Fully cured resin foam bodies can be post-fabricated into useful objects by conventional means of cutting, sawing, drilling and other machining.

The following examples further illustrate the invention. Parts and percentages are by weight unless otherwise indicated or required by the context.

Examples 1—12

The principal reactants in these examples were as follows:

Examples 1—3: 100 parts of bis(4-aminophenyl)methane bis maleimide;

Examples 4—6: 100 parts of bis(4-aminophenyl)methane bis maleimide acid;

Examples 7—9: 100 parts of a blend of 2 moles of maleic anhydride and 1 mole of bis(4-aminophenyl)methane;

Examples 10—12: 100 parts of o-bis(4-aminophenyl)oxide bis maleimide.

In each, to the 100 parts of principal reactants, was added 10 parts of p-toluene sulfonyl semicarbazide as decomposable blowing agent and 10 parts of a fatty acid alkanolamide surfactant tradenamed Ninol AA—62 from Stephan Chemical Company.

Each formulation was ground and thoroughly blended together and was placed in an aluminum pan in an air-ciculating oven at temperatures and for times set out in Table I, after which the foamed products were removed, cooled and tested.

TABLE I

| Reaction Conditions: Temp. °C | Foam Density, g/l (pcf) 30 min @ 200° + 90 min @ 275° | 30 min @ 225° + 90 min @ 275° | 30 min @ 250° + 90 min @ 275° |
|---|---|---|---|
| Example No. | | | |
| 1 | 157.3 (9.82) | | |
| 2 | | 98.8 (6.17) | |
| 3 | | | 66.6 (4.16) |
| 4 | 40.8 (2.55) | | |
| 5 | | 38.4 (2.40) | |
| 6 | | | 33.3 (2.08) |
| 7 | 49 (3.06) | | |
| 8 | | 33.3 (2.08) | |
| 9 | | | 27.4 (1.71) |
| 10 | 166.6 (10.4) | | |
| 11 | | 105.2 (6.57) | |
| 12 | | | 100.9 (6.3) |

Each of the foam products from these examples was a hard, rigid but not friable foam. The cells were generally closed and of quite uniform small size. A small piece of each was tested and found to be completely insoluble in dimethylformamide in which all of the principal reaction starting materials were soluble.

A piece of each foam product was held for ten seconds in a horizontal position 3.81 cm (1.5 inches) above the top and in the flame of a standard Bunsen burner burning natural gas in air, then removed. The flame temperature impinging on the foam surface was measured as 1027°C. In each

instance, the foamed resin did not melt, drip or fuse. The area of resin foam surface on which the flame inpinged glowed red in the gas flame, but there was very little smoke therefrom. Immediately after removing the foam piece from the burner flame, a check was made for any persisting surface flame or burning on the resin surface. It was observed in Examples 1—6 that any such surface flame lasted less than one second; a surface flame lasted slightly longer in Example 7 but less than one second in Examples 8 and 9; in Examples 10—12, a surface flame lasted longer in 10 (foam of greater density) and least in Example 12. After cooling, the area of foamed resin exposed to gas flame in each instance was still strong, not "punky".

### Example 13

In each of several tests, 100 parts of 4,4′-methylene-dianiline-bis-maleamic acid was ground and thoroughly mixed together with 10 parts of p-toluene sulfonyl semicarbazide blowing agent and 10 parts of one of the surfactants identified in Table II. In each test, the mixture was placed in an aluminum pan and heated in an air oven at 225°C for ten minutes, whereupon it was removed, cooled and evaluated, especially as to apparent density of the foam and the size and uniformity of its cells as a measure of surfactant efficacy. The results are set out in Table II.

TABLE II

| Test No. | Surfactant: Trade Name | Surfactant: Chemical Description | Foam Density g/l (pcf) | Remarks |
|---|---|---|---|---|
| 13.01 | Surfynol 104 | tetramethyl decynediol | 23.2 (1.45) | Foamed well; fairly small cells. |
| 13.02 | Dowfax 2AI liq. (45% solids) | sodium dodecyl-diphenyl ether disulfonate | 27.2 (1.7) | Foamed well; fairly uniform and small cells. |
| 13.03 | Dowfax 2AI liq. (45% solids) | sodium n-decyl-diphenyl-ether-disulfonate | 38 (2.37) | Foamed fairly well; some cell irregularity. |
| 13.04 | — | sodium lauryl sulfate (liq., 40% solids) | 29.6 (1.85) | Foamed well; some irregular cells. |
| 13.05 | Aerosol A-102 (30% solids) | disodium ethoxylated alcohol half ester of sulfosuccinic acid | 20.5 (1.28) | Foamed well; some large, irregular cells. |
| 13.06 | Aerosol A-103 (30% solids) | disodium ethoxylated nonylphenol half ester of sulfosuccinic acid | 27.7 (1.73) | Foamed well; some large, irregular cells. |
| 13.07 | Alipal EP-110 (liquid) | Ammonium salt of a sulfate ester of an alkylphenoxy-poly(ethyleneoxy)ethanol | 32.2 (2.01) | Foamed well; good cell structure. |
| 13.08 | Alipal EP-120 (liquid) | similar to Alipal EP-110 | 30.6 (1.91) | Foamed very well; cells very small and uniform. |
| 13.09 | Alipal CO-433 (liquid) | sodium salt of a sulfate ester of an alkylphenoxy-poly(ethylenoxy)ethanol | 30.3 (1.89) | Foamed well; good cell structure. |
| 13.10 | F-218 | a cyclic dimethylsiloxane | ND | Foamed fairly well; some irregular cells. |

TABLE II (Continued)

| Test No. | Surfactant Trade Name | Surfactant Chemical Description | Foam Density g/l (pcf) | Remarks |
|---|---|---|---|---|
| 13.11—1 | DC-200 | dimethylsiloxane polymer $10^{-4}$ $m^2$ $s^{-1}$ (100 cs) | ND | Foamed fairly well. |
| —2 | same | polymer 2.$10^{-4}$ $m^2$ $s^{-1}$ (200 cs) | 61.8 (3.86) | Foamed quite well. |
| —3 | same | polymer 5.$10^{-4}$ $m^2$ $s^{-1}$ (500 cs) | 53.8 (3.36) | " |
| —4 | same | polymer $10^{-3}$ $m^2$ $s^{-1}$ (1000 cs) | 46.3 (2.89) | " |
| —5 | same | polymer 12.5 $10^{-3}$ $m^2$ $s^{-1}$ (12500 cs) | 39.2 (2.45) | " |
| —6 | same | 6.$10^{-2}$ $m^2$ $s^{-1}$ (6000 cs) | 28 (1.75) | " |
| 13.12—1 | DC-510 | phenylmethylsiloxane polymer ($10^{-4}$ $m^2$ $s^{-1}$ (100 cs) | 25.8 (1.61) | Foamed fairly well. |
| —2 | same | polymer 5.$10^{-4}$ $m^2$ $s^{-1}$ (500 cs) | 19.5 (1.22) | " |
| —3 | same | polymer $10^{-1}$ $m^2$ $s^{-1}$ (100000 cs) | 26.9 (1.68) | " |
| 13.13—1 | Deriphat 154 | disodium salt of N-tallow amine-beta-aminodipropionate | 33.6 (2.1) | Expanded very quickly; uniform cells. |
| —2 | same, but 1 part in place of 10 | | 41.6 (2.6) | Foamed well; cells not as uniform as with 10 parts. |
| 13.14 | Ninol AA-62 | fatty acid alkanolamide | 35.2 (2.2) | Foamed quite well; small cells. |
| 13.15 | Miranol HM | dicarboxylic lauric derivative, sodium salt | 36.8 (2.3) | Fine cells, soft foam. |
| 13.16 | Witacamide 5130 | alkanolamine fatty acid condensate | 49.7 (3.1) | Foamed well; fine cells. |

"ND" means, not determined.

Example 14

In another series of tests, 100 parts of 4,4′-methylene-dianiline-bis-maleamic acid was ground and thoroughly mixed together with 10 parts of p-toluene sulfonyl semicarbazide blowing agent and a surfactant, ammonium salt of a sulfate ester of an alkylphenoxy-poly(ethyleneoxy)ethanol tradenamed Alipal EP-120, in various concentrations, i.e., parts in the mixtures. The mixtures were ground and thoroughly mixed together, placed in aluminum pans and foamed in the manner and under conditions described in Example 13. The results are shown in Table III.

TABLE III

| Test | Surfactant Parts | Foam Density g/l (pcf) | Remarks |
|---|---|---|---|
| 14.01 | 1.0 | 24.5 (1.53) | Very good, uniform cell structure; essentially equivalent |
| .02 | 2.5 | 26 (1.62) | |
| .03 | 5.0 | 26 (1.62) | |
| .04 | 7.5 | 22.4 (1.40) | |
| .05 | 10. | 24.5 (1.53) | |
| .06 | 25. | 39.9 (2.49) | Foamed well, uniform cells. |
| .07 | 50. | 200.2 (12.5) | Did not foam well. |
| .08 | 100. | 514.2 (32.1) | |

Example 15

Another flame exposure test was made on a resin foam according to this invention made from 4,4′-methylene-dianiline-bis-maleimide by heating a mixture thereof with p-toluene sulfonyl semicarbazide blowing agent and Ninol AA-62 surfactant at 225°C for 30 minutes and thereafter for 90 minutes at 275°C in an air oven to form a foam block or board about one inch thick and having density of 208 g/l (13 pcf), then cooling to room temperature. A piece of ordinary filter paper was pinned to one face of the foam board while a flame from a portable propane gas torch buming in air was impinged on the other face of the board opposite the paper. The resin foam surface glowed cherry red in the gas flame but did not fuse or ignite. After 10 minutes, no scorching of the filter paper could be seen, and no afterglow was seen on the foam surface when the gas flame was momentarily removed. The flame exposure was resumed and continued for an additional 20 minutes (total of 30 minutes); after this time, the filter paper was slightly discolored but had not ignited.

The following specified trade names are registered Trade Marks, in USA at least:— Celogen, Dowfax, Deriphat, Ninol and Miranol.

**Claims**

1. A cellular resin body having apparent density less than 480 g/l (30 pounds per cubic foot) characterized in that the resin is a highly crosslinked three dimensional polymer consisting essentially of mer units having the general structural formula:

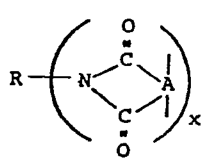

wherein:

A is a tetravalent organic radical,

the carbonyl groups are attached to vicinal carbon atoms in A,

the polymer valence bonds of A are on vicinal carbon atoms,

R is a hydrocarbyl or oxydi(hydrocarbyl) radical having at least 2 carbon atoms and having x valence bonds on different carbon atoms,

x is 2 to 4,

and the above illustrated unit is connected by the polymer valence bonds thereof to at least two other such units.

2. The cellular resin body according to Claim 1 characterized in that A is

—CH—CH—.

3. Cellular resin body according to Claim 2 characterized in that R is at least one radical having the general formula:

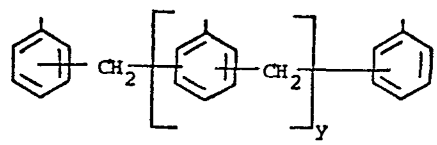

wherein y is 0 or an integer from 1 to 4.

4. A method for making a cellular resin body having apparent density less than 480 g/l (30 pounds per cubic foot), wherein the resin is a highly crosslinked three-dimensional polymer, by heating to effect polymerization, crosslinking and foaming of a reaction mixture comprising at least one resin-forming material selected from

(a) ethylenically unsaturated imides having the general formula:

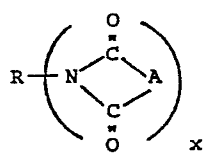

(b) ethylenically unsaturated amic acids having the general formula:

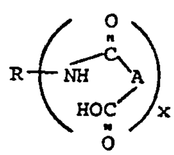

and (c) mixtures of at least one ethylenically unsaturated dicarboxylic acid cyclic anhydride having the general formula:

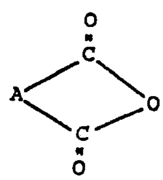

and at least one poly(primary amine) having the general formula:

$$R(NH_2)_x$$

in starting proportion of approximately x moles of the anhydride for each mole of poly(primary amine), in which formulae

A is a divalent organic radical having a polymerizable ethylenic double bond,

the carbonyl groups are attached to vicinal carbon atoms in A,

R is a hydrocarbyl or oxydihydrocarbyl radical having at least 2 carbon atoms and having x-valence bonds on different carbon atoms, and

x is 2 to 4.

which reaction mixture also comprises a thermally stable surfactant and, at least when the resin-forming material consists essentially of a defined ethylenically unsaturated imide, the reaction mixture also comprises a thermally decomposable blowing agent, with the proviso that the presence of an azomethine in the reaction mixture is excluded when a polyimide of an ethylenically unsaturated dicarboxylic acid is the only resin-forming material.

5. The method of claim 4 wherein the resin-forming material is a bis-maleimide and the reaction mixture comprises a thermally decomposable blowing agent.

6. The method of claim 5 wherein the bis-maleimide is a bis (aminophenyl) methane-bis-maleimide.

7. The method of Claim 4 wherein the resin-forming material is a bis-maleamic acid.

8. The method of Claim 4 wherein the resin-forming material is a mixture of at least one anhydride selected from maleic anhydride, tetrahydrophthalic anhydride and bicyclo(2.2.1)hept-5-ene-2,3-dicarboxylic anhydride and at least one defined poly(primary diamine).

9. The method of Claim 8 wherein the poly(primary diamine) is a bis(aminophenyl) methane.

10. The method according to Claim 4 wherein the resin-forming and foaming reaction is carried out initially at a temperature in the range from 200° to 250°C and the resulting foamed product is cured by further heating at a temperature in the range from 250° to 300°C.

**Revendications**

1. Corps en résine celluláire ayant une densité apparente inférieure à 480 g/l (30 pounds per cubic foot) caractérisé par le fait que la résine est un polymère tridimensionel fortement réticulé constitué essentiellement par des unités mères ayant la formule structurale générale:

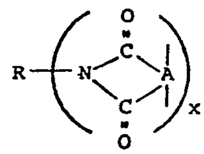

dans laquelle A est un radical organique tétravalent,

les groupes carbonyle sont liés aux atomes de carbone vicinaux dans A,

les liaisons de valence polymère de A sont sur les atomes de carbone vicinaux,

R est un radical hydrocarbyle ou oxydi(hydrocarbyle) ayant au moins 2 atomes de carbone et ayant des liaisons de valence x sur des atomes de carbone différents,

x est 2 à 4,

et l'unité illustrée ci-dessus est reliée par ses liaisons de valence polymère à au moins deux autres de ces unités.

2. Corps en résine cellulaire selon la revendication 1, caractérisé par le fait que A est

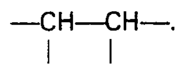

3. Corps en résine cellulaire selon la revendication, caractérisé par le fait que R est au moins un radical ayant la formule générale:

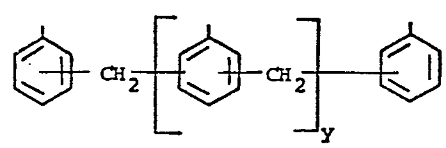

dans laquelle y est 0 ou un nombre entier valant 1 à 4.

4. Procédé pour la fabrication d'un corps en résine cellulaire ayant une densité apparente inférieure à 480 g/l (30 pounds per cubic foot), dans lequel la résine est un polymère tridimensionnel fortement réticulé, par chauffage, pour effectuer la polymérisation, la réticulation et la formation de mousse, d'un mélange réactionnel comprenant au moins une matière formant une résine choisie parmi

(a) des imides éthyléniquement insaturés ayant la formule générale:

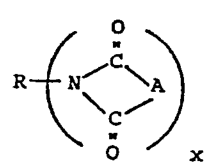

(b) des acides amiques éthyléniquement insaturés ayant la formule générale:

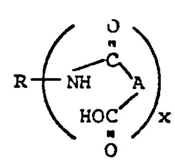

et (c) des mélanges d'au moins un anhydride cyclique d'acide dicarboxylique éthyléniquement insaturé ayant la formule générale:

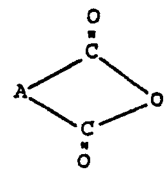

et d'au moins une poly(amine primaire) ayant la formule générale:

$$R\,(NH_2)_x$$

dans la proportion de départ d'environ x moles de l'anhydride pour chaque mole de poly (amine primaire), formules dans lesquelles

A est un radical organique divalent comportant une double liaison éthylénique polymérisable,

les groupes carbonyle sont reliés aux atomes de carbone vincinaux dans A,

R est un radical hydrocarbyle ou oxy-dihydrocarbyle ayant au moins 2 atomes de carbone et ayant des liaisons de valence x sur des atomes de carbone différents, et

x est 2 à 4

mélange réactionnel qui comprend également un tensio-actif thermiquement stable et, au moins quand la matière formant la résine consiste essentiallement d'un imide défini éthyléniquement insaturé, le mélange réactionnel comprend également un agent porogène décomposable par la chaleur, à condition que la présence d'une azométhine dans le mélange réctionnel soit exclue quand un poly-imide d'un acide dicarboxylique éthyléniquement insaturé est la seule matière formant la résine.

5. Procédé selon la revendication 4, dans lequel la matière formant la résine est un bis-maléimide et le mélange réactionnel comprend un agent porogène décomposable par la chaleur.

6. Procédé selon la revendication 5, dans lequel le bis-maléimide est un bis(aminophényl) méthane-bis-maléimide.

7. Procédé selon la revendication 4, dans lequel la matière formant la résine est un acide bis-maléamique.

8. Procédé selon la revendicatien 4, dans lequel la matière formant la résine est un mélange d'au moins un anhydride choisi parmi l'anhydride maléique, l'anhydride tétrahydrophtalique et l'anhydride bicyclo(2.2.1)hept-5-ène-2,3-dicarboxylique, et au moins une poly(diamine primaire) définie.

9. Procédé selon la revendication 8, dans lequel la poly(diamine primaire) est un bis(aminophényl)méthane.

10. Procédé selon la revendication 4, dans lequel la réaction de formation de la résine et de formation de la mousse est effectuée initialement à une température allant de 200° à 250°C et le produit mousse résultant est durci par un chauffage ultérieur à une température allant de 250° à 300°C.

**Patantansprüche**

1. Zellförmiger Harzkörper mit einer scheinbaren Dichte von weniger als 480 g/l (30 US-Pfund pro Kubikfuß), dadurch gekennzeichnet, daß das Harz ein hochvernetztes dreidimensionales Polymer ist, das im wesentlichen besteht aus Mereinheiten der allgemeinen Strukturformel

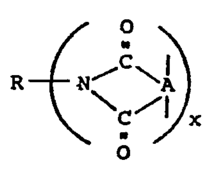

in der

A ein vierwertiger organischer Rest ist,

die Carbonylgruppen an benachbarte Kohlenstoffatome in A gebunden sind,

die Polymervalenzbindungen von A sich an benachbarten Kohlenstoffatomen befinden,

R ein Hydrocarbyl- oder Oxydi(hydrocarbyl)rest mit mindestens 2 Kohlenstoffatomen und x Valenzbindungen an verschiedenen Kohlenstoffatomen ist,

x 2 bis 4 ist

und die vorstehend erläuterte Einheit durch ihre Polymervalenzbindungen an mindestens 2 andere derartige Einheiten gebunden ist.

2. Zellförmiger Harzkörper nach Anspruch 1, dadurch gekennzeichnet, daß A

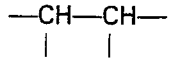

ist.

3. Zellförmiger Harzkörper nach Anspruch 2, dadurch gekennzeichnet, daß R mindestens ein Rest der allgemeinen Formel

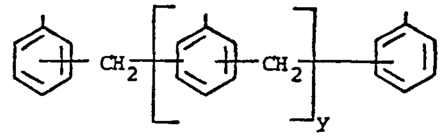

ist, wobei y 0 oder eine ganze Zahl von 1 bis 4 ist.

4. Verfahren zur Herstellung eines zellförmigen Harzkörpers mit einer scheinbaren Dichte von weniger als 480 g/l (30 US-Pfung pro Kubikfuß), wobei das Harz ein hochvernetztes dreidimensionales Polymer ist, indem man eine Reaktionsmischung, die mindestens ein harzbildendes Material ausgewählt aus

(a) ethylenisch ungesättigten Imiden der allgemeinen Formel

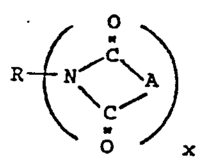

(b) ethylenisch ungesättigten Amidocarbonsäuren der Formel

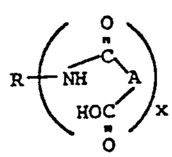

und

(c) Mischungen von mindestens einem cyclischen Anhydrid einer ungesättigten Dicarbonsäure der allgemeinen Formel

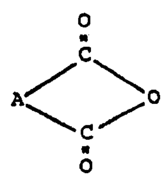

und mindestens einem primären Polyamin der allgemeinen Formel

$$R\!-\!(NH_2)_x$$

in einem Anfangsverhältnis von annähernd x Molen des Anhydrids für jedes Mol primären Polyamins wobei in den Formeln

A ein zweiwertiger organischer Rest mit einer polymerisierbaren ethylenischen Doppelbindung, die Carbonylgruppen an benachbarten Kohlenstoffatomen von A sitzen,

R ein Hydrocarbyl- oder Oxidi(hydrocarbyl)rest mit mindestens zwei Kohlenstoffatomen und mit x Bindungen an unterschiedliche Kohlenstoffatome, und

x 2 bis 4 ist, enthält,

wobei in der Reaktionsmischung weiterhin ein thermisch stabiles oberflächenaktives Mittel und zumindest wenn das harzbildende Material im wesentlichen aus ethylenisch ungesättigten Imiden gemäß a) besteht, auch noch ein thermisch zersetzbares Blähmittel enthalten ist, mit der Bedingung, daß die Anwesenheit von Azomethin ausgeschlossen ist, wenn nur Polyimid einer ethylenisch ungesättigten Dicarbonsäure das harzbildende Material ist.

5. Verfahren nach Anspruch 4, dadurch gekennzeichnet, daß das harzbildende Material ein Bismaleinimid ist und die Reaktionsmischung ein thermisch zersetzbares Treibmittel anthält.

6. Verfahren nach Anspruch 5, dadurch gekennzeichnet, daß das Bis-maleinimid ein Bis-(aminophenyl)methan-bis-maleinimid ist.

7. Verfahren nach Anspruch 4, dadurch gekennzeichnet, daß das harzbildende Material eine Bismaleinamidosäure ist.

8. Verfahren nach Anspruch 4, dadurch gekennzeichnet, daß das harzbildende Material eine Mischung von mindestens einem Anhydrid, ausgewählt aus Maleinsäureanhydrid, Tetrahydrophthalsäureanhydrid und Bicyclo(2.2.1)hept-5-en-2.3-dicarbonsäureanhydrid und mindestens einem der definierten Poly-(primären Diamine) ist.

9. Verfahren nach Anspruch 8, dadurch gekennzeichnet, daß das Poly-(primäre Diamin) ein Bis-(aminophenyl)methan ist.

10. Verfahren nach Anspruch 4, dadurch gekennzeichnet, daß die Harzbildungs- und Aufschäumungsreaktion zuerst bei einer Temperatur im Bereich von 200 bis 250°C durchgeführt wird und daß das erhaltene aufgeschäumte Produkt durch weiteres Erwärmen auf eine Temperatur im Bereich von 250 bis 300°C ausgehärtet wird.